# EUROPEAN PATENT APPLICATION

(11) **EP 4 026 943 A2**
(43) Date of publication of application: **13.07.2022**
(21) Application number: 21215090.8
(22) Date of filing: 16.12.2021
(51) Int. Cl.: D06N 3/00, D06N 3/04, D06N 3/14, D06N 3/18

(54) **TEXTILE STRUCTURE**

(30) Priority: 11.01.2021 TW 110101008; 25.06.2021 TW 110123379
(71) Applicant: Taya Canvas (Shanghai) Company Limited, Shanghai (CN)
(72) Inventor: LIN, I-Chien, Shanghai (CN)
(74) Representative: Becker, Eberhard

(57) **Abstract**

A textile structure (60) includes a fiber-based layer (20) and a glue layer (30, 40). The fiber-based layer (20) has meshes (23) and includes fiber of which basic composition is cellulose. The glue layer (30, 40) penetrates into the meshes (23).

## Description

### BACKGROUND

### Technical Field

The disclosure relates to a textile structure, and in particular, to a degradable textile structure.

### Description of Related Art

In general, the textile structures (e.g. a canvas) used in the past for advertising or sun blocking or as canopies for shops and buildings are usually woven by polyethylene (PE). They are single-color woven layers or woven layers with stripes of colors woven by PE warp threads and weft threads. These woven layers themselves are not waterproof, so a lamination film layer has to be coated on their surfaces for a waterproof function. The lamination film layer has an advantage of low specific gravity, however, it is not easy for the lamination film layer to attach on the surfaces of the woven layers, the lamination film layer is thin and the material itself lacks sufficient softness, therefore, when the textile structures woven by PE are bent or bumped, the lamination film layer tends to be damaged or peeled off at a crease and thus lose its waterproof function.

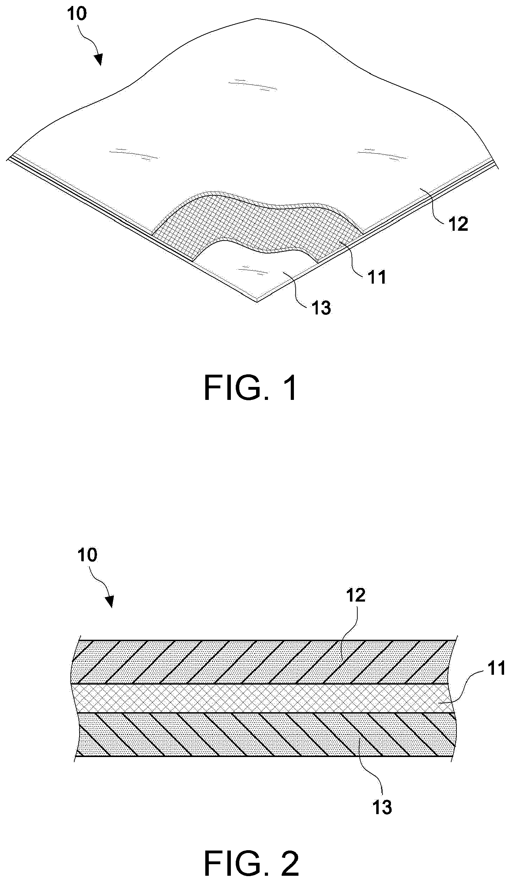

Hence, a textile structure 10 woven by PVC as shown in FIG. 1 and FIG. 2 has emerged as a solution to the problem above. The textile structure 10 is composed of a PVC layer 12 and a PVC layer 13 glued to or hot pressed on the upper and the lower surfaces of a fiber-based layer 11 in the middle. The textile structure 10 exhibits a good tensile strength and a good waterproof function, so it is usually adopted as a waterproof, sun blocking, or advertising canvas. However, PVC, short for polyvinylchloride, is regarded as "toxic plastic" by the Greenpeace. Despite its toxicity, the production of PVC had made it the second only to PE among the most widely used plastics since it is cheap and easy to manufacture. PVC is everywhere in our daily lives and causes serious damage to the environment and our health.

Moreover, among the five most widely used plastics (PE, PVC, PP, PS, ABS), PVC is the only one containing chlorine. Since PVC contains chlorine, the softness can be changed by adding a plasticizer. Besides, PVC exhibits terrible thermal stability. Apart from a plasticizer, a stabilizer has to be added into PVC to prevent PVC products from pyrolysis when exposed to the sun or high temperature. A stabilizer is usually heavy metal such as lead, cadmium, or zinc. Therefore, PVC is not as simple as itself. It contains a plasticizer and a stabilizer which are harmful to the environment and our health. Although PVC itself without any additives is non-toxic, it is useless.

Accordingly, the term "toxic plastic" used by the Greenpeace does not refer to PVC itself without any additives nor merely the PVC products containing the additives. It refers to the whole life cycle of the PVC products, of which each phase starting from raw material extraction, manufacturing, use to disposal is harmful to the environment and our health.

Furthermore, PVC is resistant to corrosions and has bright colors, high hardness, and great durability, while it exhibits worse thermal stability and photostability. Exposed to sunlight for a long time or being at 100°C, PVC would be decomposed and, consequently, hydrogen chloride would be emitted. Therefore, when manufacturing plastics, it is necessary to add some toxic auxiliary materials such as a stabilizer, a plasticizer, and an antiager to strengthen the heat resistance, toughness, extensibility, and so on. A density of pure PVC is 1.4 g/cm³, and a density of PVC with additives such as a plasticizer is 1.15 to 2.00 g/cm³. The harmful additives and plasticizer in PVC may effuse or gasify and thus disturb the endocrine system and the reproductive system of an organism and pose a risk of developing a cancer. As a result, some types of plasticizers have been listed as substances of high concern by the EU countries and the use of these substances are completely banned. In addition, in the US, for example, 75% of plastic waste ends up in landfills, which is harmful to the environment. Therefore, regarding the above issues of the textile structures woven by PVC, there is still room for improvement.

### SUMMARY

The disclosure is directed to a textile structure which serves as an eco-friendly solution to a disposal issue.

A textile structure of the disclosure includes a fiber-based layer and a glue layer. The fiber-based layer has meshes and includes fiber of which basic composition is cellulose. The glue layer penetrates into the meshes.

In an embodiment of the disclosure, the textile structure further includes a coating disposed on a surface of the glue layer which is located above the meshes. The coating includes an acrylic resin material.

In an embodiment of the disclosure, a thickness of the coating is in a range of 0.01 mm to 0.15 mm.

In an embodiment of the disclosure, the glue layer includes a slurry. The slurry includes an additive based on phosphorus, antimony, or bromine.

In an embodiment of the disclosure, the glue layer includes a brightener.

In an embodiment of the disclosure, the glue layer includes an auxiliary agent.

In an embodiment of the disclosure, a thickness of the fiber-based layer is in a range of 0.2 mm to 0.8 mm.

In an embodiment of the disclosure, the glue layer includes a first glue layer located on a first surface of the fiber-based layer and a second glue layer located on a second surface of the fiber-based layer opposite to the first surface. A thickness of the first glue layer and a thickness of the second glue layer are in a range of 0.2 mm to 0.8 mm.

In an embodiment of the disclosure, the textile structure further includes a light blocking layer disposed on a surface of the glue layer.

Based on the above, the fiber-based layer of the disclosure has meshes and includes fiber of which basic composition is cellulose. Since cellulose is natural fiber, cellulose has a greater degradation rate and biological compatibility during a disposal process, and as a result, may serve as an eco-friendly solution to a textile structure disposal issue.

In order to make the aforementioned features and advantages of the disclosure more comprehensible, embodiments accompanied with drawings are described in detail below.

### BRIEF DESCRIPTION OF THE DRAWINGS

FIG. 1 is a schematic diagram of an appearance of a conventional textile structure.
FIG. 2 is a schematic cross-sectional diagram of a conventional textile structure.
FIG. 3A is a schematic diagram of an appearance of a fiber-based layer of a textile structure according to some embodiments of the disclosure.
FIG. 3B is a schematic cross-sectional diagram of a cross-section area 3B-3B' in FIG. 3A.
FIG. 4 is a perspective cross-sectional diagram of a textile structure according to some embodiments of the disclosure.
FIG. 5 is a schematic cross-sectional diagram of a cross-section area 5-5' in FIG. 4.
FIG. 6 is a schematic cross-sectional diagram of a textile structure according to some embodiments of the disclosure.
FIG. 7 is a schematic diagram illustrating an application of a textile structure according to some embodiments of the disclosure.
FIG. 8 is a coordinate chart illustrating a comparison between the biodegradation rates of wood pulp viscose fiber and other degradable materials according to some embodiments of the disclosure.

Note that the layer in each drawing is illustrative. The disclosure is not limited to the shape, the layer numbers, and the thickness ratios as illustrated.

### DESCRIPTION OF THE EMBODIMENTS

The disclosure may be understood more comprehensively by referring to the drawings. However, the disclosure may also be embodied in various forms and should not be limited to the embodiments described herein. The thickness or size of layers and regions in the drawings may be magnified for clarity. The same or similar elements are designated by the same or similar reference numerals, and descriptions thereof are omitted in the following paragraphs.

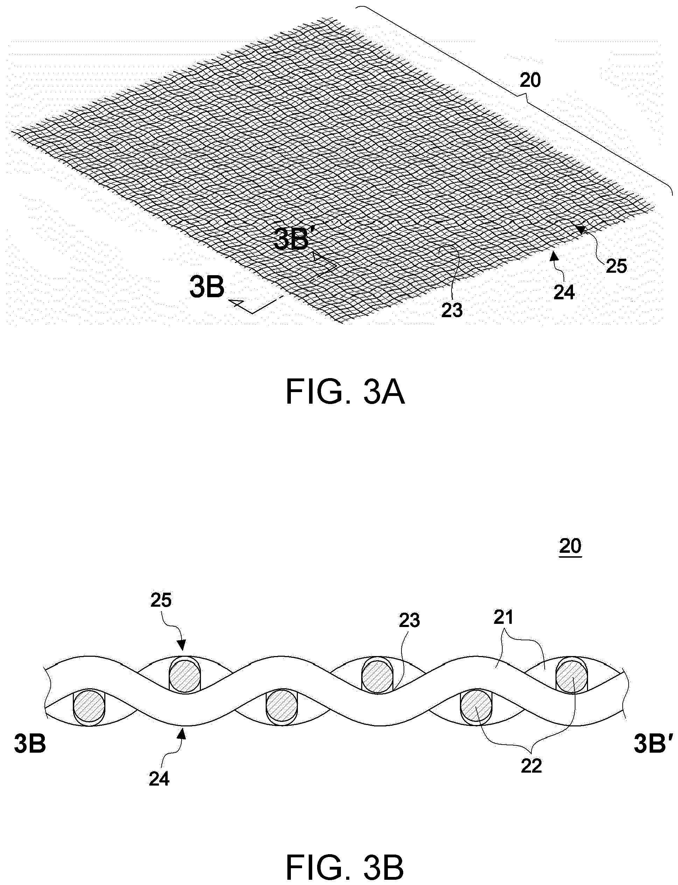

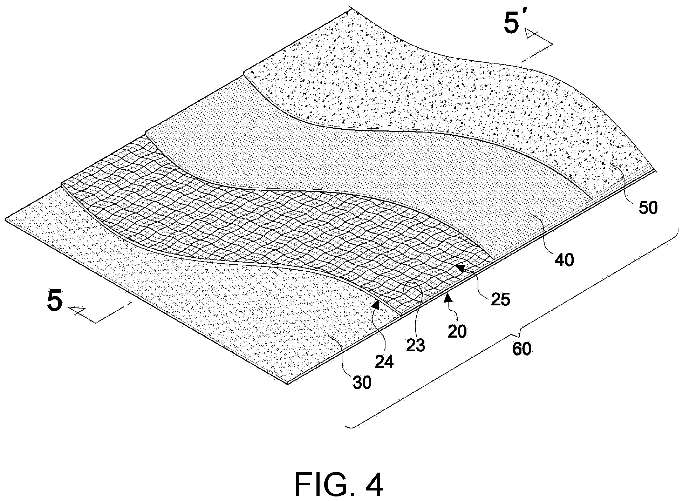

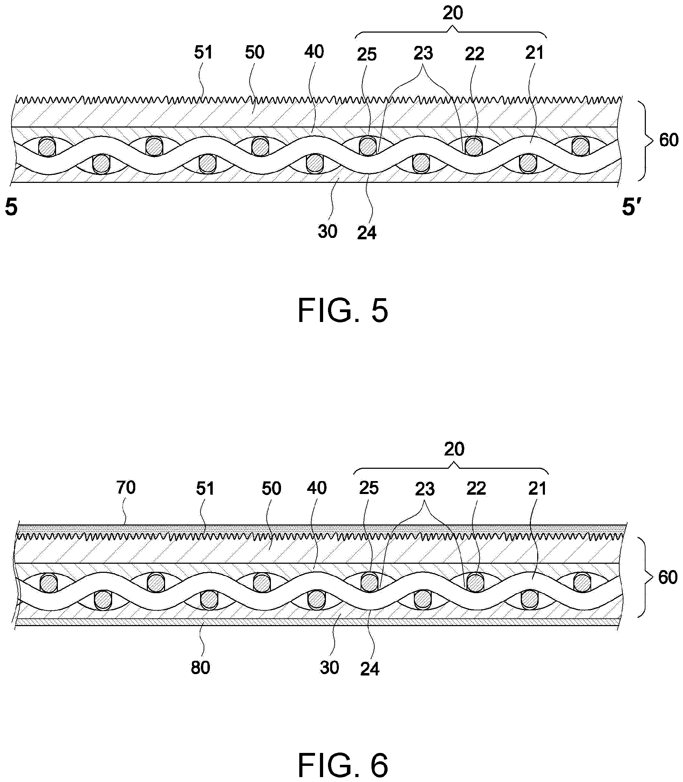

FIG. 3A is a schematic diagram of an appearance of a fiber-based layer of a textile structure according to some embodiments of the disclosure. FIG. 3B is a schematic cross-sectional diagram of a cross-section area 3B-3B' in FIG. 3A. FIG. 4 is a perspective cross-sectional diagram of a textile structure according to some embodiments of the disclosure. FIG. 5 is a schematic cross-sectional diagram of a cross-section area 5-5' in FIG. 4.

First, a textile structure 60 of the embodiment is, for example, an inkjet painting advertising canvas; however, the disclosure is not limited thereto. The textile structure may be any other suitable textile structures. Referring to FIG. 3A, FIG. 3B, FIG. 4, and FIG. 5, in the embodiment, the textile structure 60 includes a fiber-based layer 20 and a glue layer (alternatively a glue layer 30 or a glue layer 40). The fiber-based layer 20 has meshes 23 and includes fiber of which basic composition is cellulose (C₆H₁₀O₅)ₙ. The glue layer (alternatively the glue layer 30 or the glue layer 40) penetrates into the meshes 23. Accordingly, the fiber-based layer 20 of the embodiment has meshes and includes fiber of which basic composition is cellulose. Since cellulose is natural fiber, cellulose exhibits a greater degradation rate and biological compatibility during a disposal process, and as a result, may serve as an eco-friendly solution to a textile structure disposal issue.

In some embodiments, the fiber-based layer 20 may be a mesh-shaped woven fabric woven by warp threads 21 and weft threads 22 of wood pulp viscose fiber of which basic composition is cellulose. Hence, the fiber-based layer 20 has the meshes 23, as shown in FIG. 3A and FIG. 3B. Here, the wood pulp viscose fiber is manufactured by following process. The natural fiber (wood fiber or cotton linter) is adopted as a raw material, then, soluble cellulose xanthate is manufactured through procedures such as alkalization, aging, and sulfonation and is dissolved in a diluted lye solution to manufacture viscose. Then, viscose goes through wet spinning to manufacture the wood pulp viscose fiber. Furthermore, a baked strength of wood pulp viscose fiber is over 30.0cN/tex, and wood pulp viscose fiber exhibits good hygroscopicity. A moisture regain of wood pulp viscose fiber at a standard atmospheric condition is approximately 13%. Wood pulp viscose fiber expands apparently after moisture absorption, and its diameter may increase by approximately 50%; however, the disclosure is not limited thereto. In other embodiments, the fiber-based layer 20 may be manufactured with cotton yarn of which basic composition is cellulose. In addition, natural fiber exhibits a good degradation effect in a disposal process and in a natural aquatic environment. Therefore, natural fiber exhibits favorable biological compatibility and benefits of environmental protection.

In some embodiments, a basic weight of the fiber-based layer 20 is approximately between 170 gsm and 200 gsm, and its thickness is approximately between 0.2 mm and 0.8 mm, such that the fiber-based layer 20 has the meshes 23 with a high density and has a high tensile property. For example, the thickness of the fiber-based layer 20 may be 0.3 mm; however, the disclosure is not limited thereto.

In some embodiments, an angle of the intersection of the warp threads 21 and the weft threads 22 is 90 degrees, and a width of the warp threads 21 and the weft threads 22 is approximately between 0.2 mm and 1 mm. The disclosure is not limited thereto.

In some embodiments, a shape of the meshes 23 may be square or other suitable shapes, and a density of the meshes 23 is 34 to 50 strands per square inch warpwise and 35 to 50 strands per square inch weftwise. In addition, each of the meshes 23 may have a substantially identical size. The disclosure is not limited thereto.

In some embodiments, the fiber-based layer 20 has a first surface 24, and a second surface 25 opposite to the first surface 24. The glue layer 30 is located on the first surface 24 of the fiber-based layer 20. The glue layer 40 is located on the second surface 25 of the fiber-based layer 20. Furthermore, the glue layer 30 and the glue layer 40 are attached on the fiber-based layer 20 and are partially absorbed by the fiber-based layer 20 to penetrate into the meshes 23. Therefore, the glue layer 30 and the glue layer 40 may partially cover the meshes 23; however, the disclosure is not limited thereto.

In some embodiments, the glue layer 30 and the glue layer 40 may be respectively coated on the first surface 24 and the second surface 25 of the fiber-based layer 20 to allow the glue layer 30 and the glue layer 40 to penetrate into the meshes 23. For example, a liquid of an adhesive material may be coated on the fiber-based layer 20 with a scraping knife. The disclosure is not limited thereto. In other embodiments, the glue layer 30 and the glue layer 40 may also form on the fiber-based layer 20 through a lamination film or in other suitable manners.

In some embodiments, a material of the glue layer 30 and the glue layer 40 may be an aqueous polyacrylate (PA) textile coating adhesive which is waterproof and fireproof; however, the disclosure is not limited thereto. In an alternative embodiment, the material of the glue layer 30 and the glue layer 40 may be materials such as PU, PP, or PE. Here, the aqueous polyacrylate textile coating adhesive may be composed of the following. Based on 100 wt% of a total content of all the composition, the composition includes 45 wt% to 65 wt% of aqueous polyacrylate in a range of 200 g/m² to 230g /m2 as a main material, 20 wt% to 35 wt% of fire retardant slurry, 4 wt% to 12 wt% of brightener, 2 wt% to 8wt% of water, and 0.4 wt% to 3 wt% of auxiliary agent. In this way, a basic weight of the textile structure 60 is approximately between 370 g/m² and 430 g/m²; however, the disclosure is not limited thereto.

Furthermore, the aqueous polyacrylate textile coating adhesive has multiple functions such as a waterproof function and a fire retarding function. The aqueous polyacrylate textile coating layer adhesive is copolymerized generally by a hard component (e.g. polymethyl acrylate) and a soft component (e.g. polybutyl acrylate). Main monomers of a polyacrylate coating layer are acrylic acid, methyl acrylate, ethyl acrylate, butyl acrylate, and the like. In order to facilitate its waterproof function, acrylamide and acrylonitrile may be added if necessary. A peroxide (e.g. potassium persulfate) is usually adopted as a polymerization initiator. Therefore, the aqueous polyacrylate textile coating adhesive has the following functions such as good light and climate fastness, being less subject to yellowing, good transparency and compatibility, being favorable for color coating product manufacturing, good launderability, good adhesion, and being cost-effective. The disclosure is not limited thereto.

In some embodiments, the fire retardant slurry includes, but not limited to, at least one of an additive based on phosphorus, an additive based on antimony, an additive based on bromine, ammonium polyphosphate, ammonium dihydrogen phosphate, colloidal antimony pentoxide, antimony trioxide, sodium antimonite, zinc borate, zirconium oxide , diammonium phosphate, sulfamic acid, sulfamic acid salt, boric acid, borates, and aluminium hydroxide. However, the disclosure is not limited thereto.

In some embodiments, the brightener includes an optical brightening agent and may be composed of an optical brightening agent, a dispersant, and water. The optical brightening agent may be compounds of triazine-stilbenes, and the dispersant may be compounds of sodium methylene dinaphthalene sulfonate. Hence, whiteness of the textile structure 60 which is manufactured is increased by using an optical effect of the optical brightening agent. However, the disclosure is not limited thereto.

In some embodiments, the auxiliary agent may include and be composed of one of an ultraviolet stabilizer, an antioxidant, or an antistatic agent or any combinations thereof. However, the disclosure is not limited thereto.

In some embodiments, a thickness of the glue layer 30 and a thickness of the glue layer 40 are approximately between 0.2 mm and 0.8 mm. For example, the thickness of the glue layer 30 and the thickness of the glue layer 40 may be 0.3 mm; however, the disclosure is not limited thereto.

In some embodiments, the textile structure 60 further includes a coating 50 disposed on a surface of the glue layer (e.g. the glue layer 40) which is located above the meshes 23. The coating 50 includes an acrylic resin material (exhibiting a property of water absorption). The disclosure is not limited thereto. In an alternative embodiment, the material of the glue layer 30 and the glue layer 40 may be materials such as PU, PP, or PE. In addition, the coating 50 may exhibit a blotting property. However, the disclosure is not limited thereto.

In some embodiments, the coating 50 may be coated on the surface of the glue layer 40. For example, a liquid of a coating material may be coated on the glue layer 40 with a scraping knife. The disclosure is not limited thereto. In other embodiments, the coating 50 may also form on the glue layer 40 through a lamination film or in other suitable manners.

In some embodiments, a thickness of the coating 50 is approximately between 0.01 mm and 0.15 mm. For example, the thickness of the coating 50 may be 0.02 mm, and poster paint of digital inkjet painting may be attached on an upper surface 51 of the coating 50. However, the disclosure is not limited thereto.

In some embodiments, a concave-convex microstructure of the surface of the coating 50 is based on a material property of the textile structure 60; however, the disclosure is not limited thereto.

Note that the reference numerals of the elements and a part of the description in the embodiments above are used in the embodiments below in which the same or similar elements are denoted with the same reference numerals. The description of the same technological features will be omitted. With regard to the omitted description, the embodiments above may be referred to, and it will not be repeated in the embodiments below.

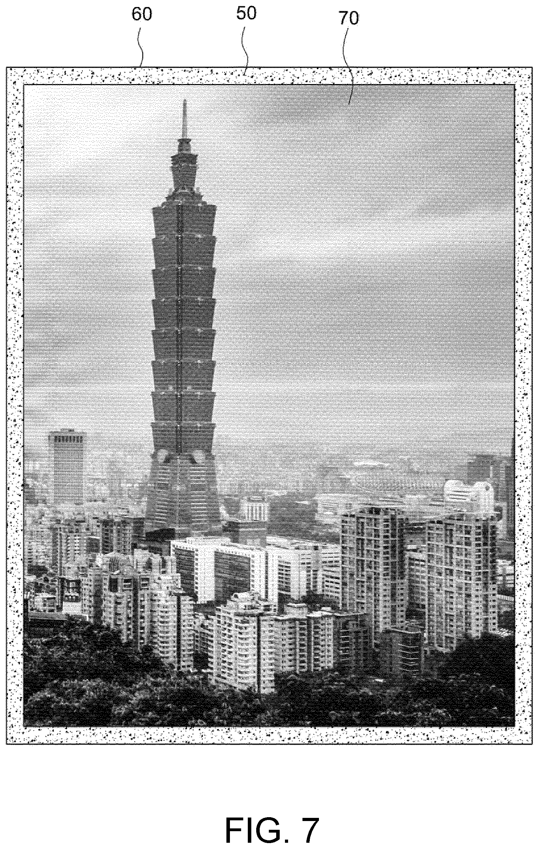

FIG. 6 is a schematic cross-sectional diagram of a textile structure according to some embodiments of the disclosure. FIG. 7 is a schematic diagram illustrating an application of a textile structure according to some embodiments of the disclosure. Referring to FIG. 6 and FIG. 7, the textile structure 60 of the embodiment further includes a light blocking layer 80 disposed on the surface of the glue layer 30. The disclosure is not limited thereto. In other embodiments, the light blocking layer 80 may be disposed on the surface of the glue layer 40 (not shown). Furthermore, the light blocking layer 80 may be disposed only on the surface of the glue layer 30, disposed only on the surface of the glue layer 40, or simultaneously disposed on both of the surfaces of the glue layer 30 and the glue layer 40.

In some embodiments, the light blocking layer 80 may be coated on the surface of the glue layer (the glue layer 30 and/or the glue layer 40). For example, a liquid of a coating material may be coated on the glue layer (the glue layer 30 and/or the glue layer 40) with a scraping knife. The disclosure is not limited thereto. In other embodiments, the light blocking layer 80 may also form on the glue layer (the glue layer 30 and/or the glue layer 40) through a lamination film or in other suitable manners.

In addition, the embodiment may further include an ink 70 disposed on the textile structure 60, as shown in FIG. 6 and FIG. 7. Due to the blotting function of the coating 50 of the textile structure 60, it is not necessary to apply an extra clear coat or protection layer to the coating 50 after the ink 70 is inkjet painted on the coating 50. The visual effect and quality after inkjet painting are enhanced so as to increase an economic value of a product. However, the disclosure is not limited thereto.

In some embodiments, a size of the textile structure 60 is greater than a size of the ink 70 so that the textile structure 60 may serve as a carrier of the ink 70; however, the disclosure is not limited thereto.

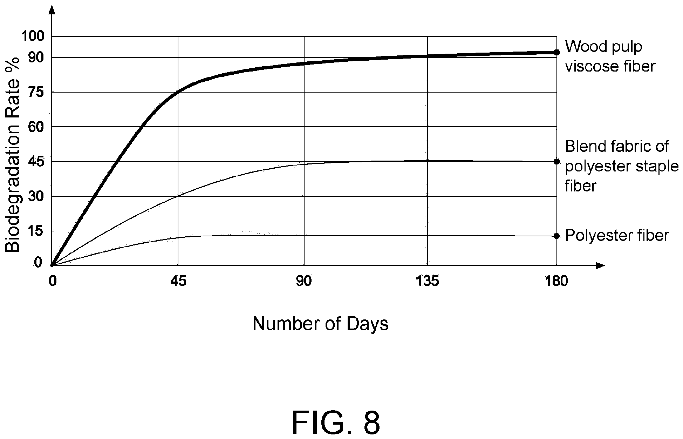

FIG. 8 is a coordinate chart illustrating a comparison between the biodegradation rates of wood pulp viscose fiber and other degradable materials according to some embodiments of the disclosure. Referring to FIG. 8, the vertical axis represents the biodegradation rate (%), and the horizontal axis represents the number of days. The biodegradation rate of polyester fiber over 180 days is only approximately 10%, and the biodegradation rate of blend fabric of polyester staple fiber is approximately 45%, which do not conform to the standard of environmental protection. The biodegradation rate of wood pulp viscose fiber may be over 75% over 45 days, over 90% over 180 days, and, ultimately may be completely degraded. Accordingly, wood pulp viscose fiber is much more favorable than polyester fiber and blend fabric of polyester staple fiber. PVC is not included in the coordinate chart for comparison since PVC is unable to be degraded. Accordingly, wood pulp viscose fiber is adopted as the fiber-based layer 20 in the disclosure. Since the baked strength of wood pulp viscose fiber is over 30.0cN/tex, and wood pulp viscose fiber exhibits great hygroscopicity, wood pulp viscose fiber accompanied by the aqueous polyacrylate textile coating adhesive may be used so that a textile structure may exhibit properties such as good compatibility and strong mutual binding force. Therefore, the textile structure may serve as a favorable product (e.g. serve as a good inkjet painting advertising canvas which is eco-friendly). The disclosure is not limited thereto.

In the disclosure, the wood pulp viscose fiber adopted by the fiber-based layer 20 of the textile structure 60 has the meshes 23 with a high density and has a high tensile property, and the glue layer 30 and the glue layer 40 made from the aqueous polyacrylate textile coating adhesive are coated respectively on the first surface 24 and the second surface 25 of the fiber-based layer 20. The layers are milky white highly-crystallized polymers which are non-toxic, odorless, and tasteless. They are made from one of the lightest types of plastics with a density of only 0.90 to 0.91 g/cm³, which is around 60% of a density of PVC. Among plastics, polyacrylate exhibits the best heat resistance and has a heat distortion temperature of 80°C to 100°C, and also exhibits good stress cracking resistance and long bending fatigue life. Furthermore, the coating 50 is mainly composed of acrylic resin and may have a blotting function when used at a proper proportion with polyacrylate. Accordingly, the textile structure 60 of the disclosure may be a composite structure of a fireproof, waterproof, and blotting coating; however, the disclosure is not limited thereto.

In addition, since the textile structure 60 does not include PVC and is non-toxic, the textile structure 60 is particularly suitable for interior and exterior advertising and interior decoration. The textile structure 60 also conforms to the use of the medical standard. Furthermore, compared with products which are currently commercially available, a weight of the textile structure 60 is reduced by 35% so the textile structure 60 is light and soft. The textile structure 60 is easy and convenient to install or disassemble and easy to remove. Besides, since the textile structure 60 exhibits good assembling structure strength and may be processed with a predetermined molding machine, a width (W) of the textile structure 60 may be customized based on a customer's need. The width (W) may reach a maximum of 5.0 m. In this way, the textile structure 60 may be inkjet painted flexibly based on a need of a practical design. Therefore, the textile structure 60 may be more applicable and selective.

The wood pulp viscose fiber of the disclosure is certified by the STANDARD 100 by OEKO-TEX^{®} to use the OEKO-TEX^{®} label with an OEKO-TEX STANDARD 100 test report SH004 133085.1 (of the textile structure 60). The report reads as follows: According to the product class I categorized by the STANDARD 100 BY OEKO-TEX^{®}, a test result of the products in the appendix 4 indicates that the goods above conform to the standard of the latest textile products for babies and the Annex XVII of the current EU REACH (including the restrictions of use of azo dye, nickel, and so on). Meanwhile, the goods above also conform to the total lead content limits of products for children in the Consumer Product Safety Improvement Act (CPSIA) of the US. The certified company has made the declaration that conformity of an object to the specified requirements is attested according to ISO17050 1, ensuring that the OEKO- TEX^{®} label is only applied to the goods conforming to the test sample. The declaration undergoes a review and verification.

The following is a comparison between the textile structure 60 of the disclosure and a conventional PVC textile structure.

| | The textile structure of the disclosure | A conventional PVC textile structure |
|---|---|---|
| Weight(gsm) | 370 to 430 gsm | 420 to 900 gsm |
| Main material of a coating | Viscose Fiber | PVC |
| Auxiliary material of a coating | Aqueous material | Plasticizer |
| Odor | No pungent odor | Pungent chemical odor |
| Harmless to human bodies | OEKO-TEX standard 100 | REACH 168, 6P |
| Removal | Easy | Not easy |
| Sensitization | No | Unknown |
| Shelf life | Over 2 years since it does not contain a plasticizer | Approximately 6 months |
| Recycling | It may be buried and burned without causing more serious pollution. The coating is degradable and recyclable. | When buried or burned, it would lead to more serious pollution. The coating is not degradable and not easy to be recycled. |
| Degradation rate | Viscose Fiber is completely degradable. | PVC is not degradable. |

Compared with a conventional PVC textile structure, the textile structure of the disclosure is lighter and may be replaced rapidly. It has no pungent odor. It is not toxic and not harmful to the human body, and it does not cause sensitization. Since it does not contain a plasticizer, it may be stored over 2 years. It may be buried and burned without causing more serious pollution, and its coating is degradable and recyclable. Furthermore, the biodegradation rate of wood pulp viscose fiber is 90% or higher.

The textile structure 60 of the disclosure was tested by SGS (Shanghai), a laboratory certification institution recognized by the EU. The textile structure 60 satisfies the requirements of the classification B regarding fire resistance according to the European Standard EN13501-1-B -s1-d0. The combustion function of the products of the textile structure 60 satisfies the requirements of the additional classification s1 regarding smoke production and the requirements of the additional classification d0 regarding production of flaming droplets/particles during combustion. Therefore, the textile structure 60 of the disclosure conforms to the European Standard with the higher security standard regarding fire resistance. In other words, the textile structure 60 of the disclosure exhibits the properties of fire retardance and fire resistance conforming to the international standard.

The textile structure 60 of the disclosure is certified by the TUV sensitization test and skin irritation test of Europe. The test reports read as the following.

### Sensitization test

Environmental conditions of the test: 22°C to 26°C (room temperature); humidity: 50% to 70%. The test is in accordance with ISO 10993-10:2010. Test subjects: 30 white male guinea pigs weighting 302.4g to 362.8g. Extract media: 1. 0.9% of sodium chloride, 2. cotton seed oil. Negative control: the same extract media. Extract preparation: The two media of the extract samples were respectively prepared at 6 cm²/ml, 70°C for 24h. Test method: the maximization test. Test procedures: 1. Induction phase: The extract was injected at the back of the animals. One week later, the injection sites were covered with an extract patch for 48h. 2. Irritation phase: After skin preparation, a ventral area of the animals was covered with an extract patch for 24h. Evaluation indicator: Erythema or swelling on the treated sites of the animals were observed at 24h and 48h after patch removal.

Conclusion: During the 48h observation period, the grading scale of skin reaction of the control group was 0, and the grading scale of skin reaction of the test group was 0, which indicates that there was no sensitization reaction. In accordance with the procedures of ISO10993-10:2010, the test result of skin sensitization of the test sample extract conforms to the requirements.

### Skin irritation test

Environmental conditions of the test: 22°C to 26°C (room temperature); humidity: 50% to 70%. The test is in accordance with ISO 10993-10:2010. Test subjects: 6 male healthy New Zealand rabbits weighting 2.3kg to 2.7kg. Extract media: 1. 0.9% of sodium chloride, 2. cotton seed oil. Negative control: the same extract media. Contact manner: application to skin. Contact time: 24 hours. Evaluation indicator: Erythema or swelling on the skin issue of the contact sites were observed at 24h, 48h, and 72h.

Conclusion: The primary irritation score of the skin issue treated with the extract injection of 0.9% sodium chloride at 24h, 48h, and 72h after patch removal was 0 (the average score was 0). The primary irritation score of the skin issue treated with the extract injection of cotton seed oil at 24h, 48h, and 72h after patch removal was 0 (the average score was 0). In accordance with the procedures of ISO10993-10:2010, the test result of skin irritation test of the test sample extract conforms to the requirements.

Accordingly, the test reports above attest that the textile structure 60 of the disclosure conforms to the use of medical standard.

The textile structure 60 of the disclosure exhibits cold hardiness at minus 40°C without adding any additives. The textile structure 60 passes the standard test for use at low temperature (ASTM D2136-2002).

In summary of the above, the fiber-based layer of the disclosure has meshes and includes fiber of which basic composition is cellulose. Since cellulose is natural fiber, cellulose exhibits a greater degradation rate and biological compatibility during a disposal process, and as a result, may serve as an eco-friendly solution to a textile structure disposal issue. Furthermore, the textile structure of the disclosure exhibits favorable inkjet painting effect as an advertising canvas. Compared with the advertising canvas currently commercially available, the weight of the textile structure of the disclosure may be reduced by nearly a half and softer and more convenient to use. It is also fast and simple to install and remove the textile structure of the disclosure. Moreover, the material of the textile structure of the disclosure is light and has a compact size, which may effectively reduce the shipping cost. In addition, in the textile structure of the disclosure, compared with PVC adopted by a conventional advertising canvas, the production of wood pulp viscose fiber is easier and more energy-efficient. In contrast, PVC products are typically energy-intensive products. PVC production consumes more energy and cost in both of the calcium carbide method and the ethylene method, which is against the current global trend of energy saving, low carbon emission, recycling, and reusing. Furthermore, the disposal process of the eco-friendly inkjet painting advertising canvas made from wood pulp viscose fiber also conforms to the requirement of environmental protection. In addition, the textile structure of the disclosure may be easily crushed and recycled and transformed into other products, such as outer packaging, flower pots, inner lining in handbags, and so on. The gas generated after burning the textile structure is unlikely to cause air pollution, and it does not generate other toxic substances which pollute soil and water when it ends up in landfills for decomposition. Therefore, the textile structure may be an eco-friendly solution.

## Claims

1. A textile structure (60), comprising:
a fiber-based layer (20) having a plurality of meshes (23) and comprising fiber with basic composition of cellulose; and
a glue layer (30, 40), wherein the glue layer (30, 40) penetrates into the meshes (23).

2. The textile structure (60) according to claim 1, further comprising a coating (50) disposed on a surface of the glue layer (30, 40) located above the meshes (23), wherein the coating (50) comprises an acrylic resin material.

3. The textile structure (60) according to claim 2, wherein a thickness of the coating (50) is in a range of 0.01 mm to 0.15 mm.

4. The textile structure (60) according to claim 1, wherein the glue layer (30, 40) comprises a slurry, and the slurry comprises an additive based on phosphorus, antimony, or bromine.

5. The textile structure (60) according to claim 1, wherein the glue layer (30, 40) comprises a brightener.

6. The textile structure (60) according to claim 1, wherein the glue layer (30, 40) comprises an auxiliary agent.

7. The textile structure (60) according to claim 1, wherein a thickness of the fiber-based layer (20) is in a range of 0.2 mm to 0.8 mm.

8. The textile structure (60) according to claim 1, wherein the glue layer (30, 40) comprises a first glue layer (30, 40) located on a first surface (24) of the fiber-based layer (20) and a second glue layer (30, 40) located on a second surface (25) of the fiber-based layer (20) opposite to the first surface (24), and a thickness of the first glue layer (30, 40) and a thickness of the second glue layer (30, 40) are in a range of 0.2 mm to 0.8 mm.

9. The textile structure (60) according to claim 1, further comprising a light blocking layer (80) disposed on a surface of the glue layer (30, 40).
